## Europäisches Patentamt

## European Patent Office

## Office européen des brevets

(11) Veröffentlichungsnummer: **0 135 801**
**B1**

## EUROPÄISCHE PATENTSCHRIFT

(45) Veröffentlichungstag der Patentschrift:
04.01.89

(21) Anmeldenummer: 84110005.0

(22) Anmeldetag: 22.08.84

(51) Int. Cl.⁴: **C 08 L 69/00**, C 08 L 51/04, C 08 L 25/08, C 08 L 71/02

(54) Thermoplastische Formmasse.

(30) Priorität: 30.08.83 DE 3331158

(43) Veröffentlichungstag der Anmeldung:
03.04.85 Patentblatt 85/14

(45) Bekanntmachung des Hinweises auf die Patenterteilung:
04.01.89 Patentblatt 89/1

(84) Benannte Vertragsstaaten:
BE DE FR GB NL

(56) Entgegenhaltungen:
EP-A-0 018 591
DE-A-2 901 576
DE-A-3 149 812

(73) Patentinhaber: BASF Aktiengesellschaft, Carl-Bosch- Strasse 38, D-6700 Ludwigshafen (DE)

(72) Erfinder: Mitulla, Konrad, Dr., An der Froschlache 23, D-6700 Ludwigshafen (DE)
Erfinder: Echte, Adolf, Dr., Leuschnerstrasse 42, D-6700 Ludwigshafen (DE)
Erfinder: Ruppmich, Karl, Koenigsbacher Strasse 134, D-6700 Ludwigshafen (DE)
Erfinder: Siebel, Peter, Dr., Trifelsring 20, D-6703 Limburgerhof (DE)
Erfinder: Swoboda, Johann, Dr., Neuwiesenstrasse 28, D-6700 Ludwigshafen (DE)
Erfinder: Hambrecht, Juergen, Dr., Werderstrasse 30, D-6900 Heidelberg (DE)

LIBER, STOCKHOLM 1989

## EP 0 135 801 B1

**Beschreibung**

Die Erfindung betrifft thermoplastische Formmassen auf der Grundlage von Styrol- und Acrylnitril enthaltenden, mit Kautschuken schlagzäh modifizierten Polymerisaten und Polycarbonaten.

Zum Stand der Technik nennen wir:

1. DE-OS-3 149 812
2. EP-A-18 591
3. FR-PS-1 239 902
4. DE-AS-1 297 341 Mischungen von Styrol- und Acrylnitril enthaltenden schlagzähen Polymerisaten mit Polycarbonaten sind beispielsweise in (1) beschrieben.

Aus (3) und (4) ist die Verwendung von Ethylenoxid-Propylenoxid-Blockcopolymerisaten für die antistatische Ausrüstung von Polymeren bekannt.

Insbesondere ist in (1) die Verwendung von verzweigten Polycarbonaten beschrieben durch die in Mischungen mit Pfropfmischpolymerisaten auf Basis von ABS, ASA oder AES sich eine bessere Verarbeitungsbreite, verglichen mit Mischungen, die nicht verzweigtes Polycarbonat enthalten, erzielen läßt.

Aus (2) ist die Verbesserung der Verarbeitungsbreite bei Zusatz von Ethylenoxid-, Propylenoxid-Dreiblockcopolymerisaten zu SAN-Copolymerisaten bekannt. Die bekannten Mischungen befriedigen jedoch in bezug auf die Bindenahtfestigkeit und die Entformungskraft noch nicht.

Bindenahtstärke und die Entformungskraft von Formteilen aus Mischungen von Polycarbonat und Mischpolymerisaten, z. B. ABS, ASA und AES, zu verbessern.

Diese Aufgabe wird erfindungsgemäß dadurch gelöst, daß den schlagzäh modifizierten Acrylnitril-Styrol- und Polycarbonat-Mischungen lineare Dreiblockcopolymerisate bestimmten Aufbaus und bestimmten Molekulargewichts in einer Menge von 0,1 bis zu 3, vorzugsweise 0,15 bis 1,5 Gew.-%, bezogen auf die Mischung aus Polycarbonat und das schlagzäh modifizierte Copolymerisat, zugegeben werden.

Die Erfindung betrifft somit thermoplastische Formmassen, enthaltend (bestehend aus)

A) 10 bis 90 Gew.-%, bezogen auf A + B, mindestens eines Polycarbonates,

B) 90 bis 10 Gew.-%, bezogen auf A + B, mindestens eines Mischpolymerisates,

das gebildet wird aus

$b_1$) mindestens einem, gegebenenfalls vernetzten, Elastomeren mit einer Glastemperatur unterhalb 0°C in einem Anteil von 1 - 40 Gew.-%. bezogen auf B, das aufgebaut ist aus mindestens einem der Monomeren aus der Gruppe der konjugierten Diene mit 4 bis 5 C-Atomen, der (Meth)acrylsäurealkylester mit 1 bis 8 C-Atomen im Alkylrest, der vinylaromatischen Monomeren mit 6 bis 12 C-Atomen oder von Ethylen, Propylen und einem nicht konjugierten Dien,

worauf,

$b_2$) 5 bis 40 Gew.-%, bezogen auf B, mindestens eines Copolymerisates aufgepfropft ist, das aufgebaut ist aus mindestens einem vinylaromatischen Monomeren und mindestens einem (nichtaromatischen) ethylenisch ungesättigten Monomeren im Gewichtsverhältnis 90 : 10 bis 60 : 40 und wobei das Produkt der Pfropfmischpolymerisation eine mittlere Teilchengröße von 0,200 - 1,0 µm ($d_{50}$-Wert) der integralen Masseverteilung aufweist,

und

$b_3$) mindestens einem Copolymerisat (Hartmatrix), in einem Anteil von 20 bis 94 Gew.-%, bezogen auf B, das besteht aus

50 - 90 Gew.-%, bezogen auf $b_3$), mindestens eines vinylaromatischen Monomeren und

10 - 50 Gew.-%, bezogen auf $b_3$), mindestens eines (nichtaromatischen) ethylenisch ungesättigten Monomeren

enthaltend gegebenenfalls

C) übliche Zusatzstoffe

das dadurch gekennzeichnet ist, daß die Formmasse zusätzlich wenigstens ein aus Ethylenoxid (X)- und Propylenoxideinheiten (Y) aufgebautes lineares Dreiblockcopolymerisat D der Struktur

$$X - Y - X$$

in einem Anteil von 0,1 bis 3 Gew.-%, bezogen auf A + B, enthält wobei das mittlere Molekulargewicht (Zahlenmittel) des Dreiblockcopolymerisats im Bereich von 1000 bis 7500 liegt und wobei die mittleren Molekulargewichte (Zahlenmittel) der Blöcke

X je von 50 bis 2000

und die des

Y-Blockes 900 bis 3500 betragen.

Nachstehend wird der Aufbau der Formmasse aus den Komponenten A bis D, deren Herstellung und die Herstellung der Fonmmasse, beschrieben:

Komponente A:

Unter Polycarbonaten A im Sinne der erfindungsgemäßen Formmasse sollen aromatische Polycarbonate auf

2

der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u. a. in der Monographie H. Schnell, Chemistry and Physics of Polycarbonates, New York, Interscience Publishers, 1964, in der US-PS-2 999 835 und in der DE-OS-2 248 817 beschrieben sind. Besonders bevorzugt sind Polycarbonate auf der Basis von 2,2-Bis-(4-hydroxyphenyl)-propan. Die Synthese der Polycarbonate wird beispielsweise in der US-PS-2 999 835 und der GB-PS-772 627 beschrieben. Von der Komponente A werden 10 bis 90 Gew.-%, insbesondere 30 bis 80 Gew.-%, jeweils bezogen auf die Formmasse aus A und B, angewendet.

Komponente B:

Die thermoplastische Formmasse gemäß vorliegender Erfindung enthält die Komponente B in einem Anteil von 10 bis 90 Gew.-%, insbesondere in einem Anteil von 70 bis 20 Gew.-%, jeweils bezogen auf A + B. Der Aufbau der Komponente B der Formmasse ist dreiteilig. Die Komponente B der erfindungsgemäßen Formmasse weist als Komponente $b_1$, ein Elastomeres, in einem Anteil von 1 bis 40 Gew.-%, insbesondere von 10 bis 30 Gew.-%, jeweils bezogen auf B auf. Auf diesem Elastomeren, d. h. einem Kautschuk, der eine Glastemperatur unterhalb von 0°C, insbesondere unterhalb von -30°C aufweist, ist ein Copolymerisat $b_2$ aufgepfropft, das einen Anteil von 5 bis 40 Gew.-%, insbesondere von 5 bis 30 Gew.-%, jeweils bezogen auf B ausmacht. Die Summe aus $b_1$ und $b_2$, im nachfolgenden Text auch gelegentlich als Pfropfmischpolymerisat, d. h. als Ergebnis der Pfropfung bezeichnet, macht noch nicht die gesamte Komponente B aus. Die Komponente B enthält zusätzlich zu den Komponenten $b_1$ und $b_2$ noch mindestens ein Copolymerisat $b_3$ (Hartmatrix) in einem Anteil von 20 bis 94 Gew.-%, insbesondere von 40 bis 85 Gew.-%, jeweils bezogen auf B. Dieses Copolymerisat stellt zusammen mit der Komponente A eine gemensame Hartmatrix der Formmasse dar, in der das Pfropfmischpolymerisat gleichmäßig verteilt ist.

Nachstehend wird der Aufbau der Komponenten $b_1$ bis $b_3$ des Mischpolymerisates B beschrieben.

Aufbau von $b_1$:

Das Elastomere $b_1$ kann aufgebaut sein aus (Co)Polymerisaten konjugierter Diene mit 4 bis 5 C-Atomen, insbesondere von Butadien-1,3 und Isopren; bevorzugt ist die Verwendung von Butadien alleine. Ferner kommen in Betracht diese Ester der Acryl- bzw. Hethacrylsäure, die 1 bis 8 C-Atome im Alkylrest aufweisen. Von diesen Estern wird bevorzugt Butylacrylat bzw. das Ethyl-hexylacrylat. Ferner kommen Elastomere, die auf Basis von EPDM-Kautschuken, d. h. eines Terpolymerisates aus Ethylen, Propylen und einem nicht konjugierten Dien aufgebaut sind, in Betracht. Als nichtkonjugierte Diene für den Aufbau dieser Terpolymerisate sind bevorzugt Dicylo-pentadienhexadien-1,4 und 5-Ethylidennorbornen, Tricyclopentadien, -heptadien, -octadien usw. Das Gewichtsverhältnis Ethylen/Propylen in diesen Terpolymerisaten liegt bevorzugt im Bereich von 75 bis 25 bis 40 : 60. Das Dien ist in solchen Mengen und in solcher Form im Terpolymerisat eingebaut, daß Jodzahlen von 2 bis 30 resultieren. Dies entspricht etwa 1 bis 15 C-C-Doppelbindungen pro 1000 C-Atome. Die Monomerbausteine können dabei statistisch oder in Blöcken angeordnet sein. Die Herstellung von EPDM-Kautschuken ist dem Fachmann bekannt. Auch sind derartige Kautschuke, ebenso wie die vorstehenend genannten Butadienkautschuke und Acrylatkautschuke im Handel erhältlich. Die Money-Elastizitäten $ML_4$ bei 100°C liegen im Bereich von 20 bis 90 für die genannten EPDM-Kautschuke. Als Elastomere $b_1$ können anstelle der vorstehend genannten Homo- bzw. Terpolymerisate auch Copolymerisate, insbesondere Copolymerisate konjugierter Diene mit Alkylestern und auch Copolymerisate von Dienen mit vinylaromatischen Monomeren, wobei diese vinylaromatischen Monomeren 6 bis 12 C-Atome aufweisen, angewendet werden. Als vinylaromatische Monomere für die genannten Kautschuke werden insbesondere Styrol und dessen Allyl-Derivate, wie p-Methylstyrol und α-Methylstyrol angewendet.

Insbesondere werden jedoch Copolymerisate aus Butadien und Styrol üblicher Zusammensetzung (70/30) in den dem Fachmann bekannten Mengen angewendet.

Von den genannten Homo- oder Copolymerisaten werden ganz bevorzugt die Kautschuke auf Basis von konjugierten Dienen, und insbesondere von Butadien-1,3 angewendet. Um witterungsbeständigere Formmassen zu erhalten, werden Copolymerisate von konjugierten Dienen und von Acrylsäureestern bzw. nur Acrylatkautschuke angewendet. Auch die Anwendung von Terpolymerisaten, wie EPDM-Kautschuke, als Propfgrundlage liefert witterungsbeständigere Produkte.

Die elastomere Komponente $b_1$ kann gegebenenfalls vernetzt sein, d. h. bei der Herstellung derselben werden übliche polyfunktionelle Monomere, wie Divinyl-, Diacryl- und Diallylverbindungen in den dem Fachmann bekannten Mengen angewendet. Bevorzugt werden die Acrylatkautschuke unter Verwendung von Vernetzungsmitteln, wie Butandioldiacrylat und insbesondere Tricyclodecenylacrylat hergestellt.

Aufbau von $b_2$:

Das Copolymerisat $b_2$, d. h. die Pfropfhülle, ist aufgebaut aus mindestens je einem Monomeren aus zwei unterschiedlichen Gruppen.

Die erste Gruppe stellt vinylaromatische Monomere dar, insbesondere kommen hierbei in Betracht das Styrol, sowie die Alkylderivate, von denen das α-Methylstyrol bzw. p-Methylstyrol hervorgehoben seien. Besonders bevorzugt wird das Styrol angewendet. Um wärmeformbeständigere Massen zu erhalten, können Mischungen aus Styrol und den Alkylderivaten oder ausschließlich das α-Methylstyrol und insbesondere das p-Methylstyrol angewendet werden.

Die zweite Komponente für den Aufbau des Copolymerisates $b_2$ stellt ein (nichtaromatisches) ethylenisch ungesättigtes Monomeres dar. Als solche (nichtaromatische) ethylenisch ungesättigte Monomere kommen in Betracht, insbesondere die Derivate der Acrylsäure und Methacrylsäure. Genannt seien die Ester der Acrylsäure und der Methacrylsäure mit 1 bis 8 C-Atomen im Alkylrest sowie das Acrylnitril und das Methacrylnitril. Bevorzugt wird das (Meth)acrylnitril verwendet. Die vorstehend genannten vinylaromatischen Monomeren und die nicht aromatischen ethylenisch ungesättigten Monomeren werden im Gewichtsverhältnis von 90 : 10 bis 60 : 40 angewendet. Das Ergebnis der Herstellung des Copolymerisates in Gegenwart des Elastomeren $b_1$ ist ein Pfropfmischpolymerisat, bei der das Copolymerisat in dem Fachmann bekannten Grenzen auf das Elastomere gepropft wird. Die Herstellung der Pfropfhülle kann dabei gegebenenfalls in 2 Stufen erfolgen, wobei in der ersten Stufe der Pfropfuug 1 bis 40 Gew.-%, vorzugsweise 10 bis 35 Gew.-% lediglich des vinylaromatischen Monomeren und in der zweiten Stufe die restliche Menge des vinylaromatischen Monomeren und die Gesamtmenge des (nichtaromatischen) ethylenisch ungesättigten Monomeren, d. h. 30 bis 100 Gew.-%, angewendet werden.

Das Copolymerisat $b_2$ soll unabhängig davon, ob es in ein oder zwei Stufen hergestellt wird, 90 bis 60 Gew.-% vinylaromatische Monomere, insbesondere 85 bis 60 Gew.-%, und 40 bis 15 Gew.-% (nichtaromatische ethylenisch ungesättigte Monomere, jeweils bezogen auf $b_2$, aufweisen. Bevorzugt ist die Pfropfhülle aus 80 bis 65 Gew.-% Styrol und 20 bis 35 Gew.-% AN aufgebaut.

Sowohl das Elastomere als auch das Pfropfmischpolymerisat werden bevorzugt in Emulsion hergestellt, und können nach den üblichen Methoden einer Teilchenvergrößerung unterzogen werden. Das Pfropfmischpolymerisat soll Teilchen im Bereich vou 0,2 bis 1,0 µm ($d_{50}$-Wert der integralen Masseverteilung) aufweisen.

Aufbau von $b_3$:

Die Komponente $b_3$, das Copolymerisat, ist eine nicht elastomere Hartkomponente, die aus mindestens einen vinylaromatischen Monomeren und mindestens einem (nichtaromatischen) ethylenisch ungesättigten Monomeren aufgebaut ist.

Als vinylaromatische Monomere, die in einer Menge von 50 bis 90 Gew.-%, insbesondere vou 65 bis 80 Gew.-%, bezogen auf $b_3$, angewendet werden, kommen in Betracht: Styrol und seine Derivate, insbesondere die Alkylderivate, wie α-Methylstyrol bzw. p-Methylstyrol. Bevorzugt werden das Styrol und falls wärmeformbeständigere Formmassen angestrebt werden, die Alkylderivate angewendet.

Das nicht aromatische ethylenisch ungesättigte Monomere wird in einer Menge von 10 bis 50 Gew.-%, insbesondere von 20 bis 35 Gew.-%, bezogen auf $b_3$, angewendet. Als Monomere kommen in Betracht die Derivate der Acryl-und Methacrylsäure, insbesondere die Ester von Alkoholen mit 1 bis 8 C-Atomen im Alkylrest, sowie die Nitrile. Von den Nitrilen sind das Acrylnitril und daß Methacrylnitril bevorzugt.

Herstellung des Pfropfmischpolymerisates ($b_1 + b_2$):

Das erfindungsgemäß einzusetzende Pfropfmischpolymerisat ($b_1 + b_2$) kann im Handel bezogen werden oder es kann beispielsweise nach der in der DE-PS-1 260 135 beschriebenen Methode hergestellt werden.

Hierzu wird zunächst die Pfropfgrundlage, das Elastomere $b_1$, hergestellt, indem das oder die Kautschukmonomeren und das polyfunktionelle, die Vernetzung bewirkende, Monomere (gegebenenfalls zusammen mit weiteren Comonomeren) in wäßriger Emulsion in an und für sich bekannter Weise bei Temperaturen zwischen 20 und 100°C, vorzugsweise zwischen 50 und 80°C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf die bei der Herstellung der Pfropfgrundlage $b_1$ eingesetzten Monomeren, einzusetzen. Im allgemeinen wird bei einem Wasser- zu Monomeren-Verhältnis von 2 : 1 bis 0,7 : 1 gearbeitet. Als Polymerisationsinitiatoren dienen insbesondere die gebräuchlichen Persulfate, wie z. B. Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung des Elastomeren $b_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden - z. B. Natriumbicarbonat und Natriumpyrophosphat -, sowie 0 bis 3 Gew.-% eines Molekulargewichtsreglers - wie Mercaptane, Terpinole oder dimeres α-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des gegebenenfalls vernetzten Kautschuk-Polymerisats einen $d_{50}$-Wert im Bereich von 0,2 bis 1,0 µm, vorzugsweise im Bereich von 0,25 bis 0,7 µm besitzt. Verteilung 2 liegt im Bereich von 2 bis 0,5, insbesondere 1,5 bis 1,0.

Die genannten mittleren Teilchengrößen gelten sowohl für das Elastomere ($b_1$) als auch für das Pfropfmischpolymerisat ($b_1 + b_2$).

Zur Herstellung des Pfropfmischpolymerisats $b_1 + b_2$ wird dann im nächsten Schritt in Gegenwart des so erhaltenen Latex $b_1$ gepropft. Je nach der Art des vervendeten Elastomeren wird diese Pfropfung in einer Stufe (z. B. für Dienkautschuke, EPDM oder Dien/Styrol-Kautschuke) oder in 2 Stufen, z. B. bevorzugt für

4

Acrylatkautschuke durchgeführt. Im Falle z. B. der Acrylatkautschuke wird zur Herstellung der Pfropfhülle zuerst ein vinylaromatisches Monomeres $b_2a_1$) mit bis zu 12 Kohlenstoffatomen polymerisiert. Beispiele für solche Monomere sind Styrol, α-Methylstyrol und kernalkylierte Styrole, wie p-Methylstyrol und tert.-Butylstyrol. Besonders bevorzugt werden Styrol, α-Methylstyrol und p-Methylstyrol eingesetzt. Es ist vorteilhaft, diese Pfropfmischpolyrisation von Styrol ($b_2a_1$) auf das als Pfropfgrundlage dienende, z. B. vernetzte Acrylester-Polymerisat ($b_1$) wieder in wäßriger Emulsion unter den üblichen, oben aufgeführten Bedingungen durchführen. Die Pfropfmischpolymerisation kann zweckmäßig im gleichen System erfolgen wie die Emulsionspolymerisation zur Herstellung der Pfropfgrundlage ($b_1$), wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise kontinuierlich während der Polymerisation zugegeben werden. Die Pfropfmischpolymerisation des Styrols in Gegenwart des z. B. vernetzten Acrylsäureester-Polymerisats wird so geführt, daß ein Pfropfgrad von 2,5 bis 25 Gew.-%, vorzugsweise von 10 bis 20 Gew.-%, im Pfropfmischpolymerisat ($b_1+b_2$) resultiert. In einer zweiten Stufe wird dann die Pfropfmischpolymerisation mit einen Monomerengemisch ($b_2a_2$) aus einem vinylaromatischen Monomeren und einem nicht aromatischen ethylenisch ungesättigten Monomeren, die bereits bei der ersten Pfropfstufe eingesetzen Monomeren, Insbesondere Styrol, α-Methylstyrol und p-Methylstyrol. Beispiele für copolymerisierbare, ethylenisch ungesättigte Monomere sind Acrylnitril, (Meth)-Acrylsäurealkylester mit 1 - 4 Kohlenstoffatomen im Alkylrest, Acrylsäure, Maleinsäureanhydrid, Acrylamid und/oder Vinylmethylether. Besonders bevorzugt werden Acrylnitril, Ethylacrylat, Methylmethacrylat und Gemische aus diesen. Als besonders bevorzugte Monomeren-Gemische werden vor allem Styrol und Acrylnitril, α-Methylstyrol oder p-Methylstyrol und Acrylnitril und Styrol, Acrylnitril und Methylmethacrylat eingesetzt. Auch der zweite Schritt der Pfropfmischpolymerisation wird zweckmäßigerweise im gleichen System durchgeführt, dabei kann, falls notwendig, weiterer Emulgator und Initiator zugegeben werden. Das bevorzugt aufzupfropfende Monomeren-Gemisch aus z. B. Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des z. B. vernetzten Acrylsäureester-Polymerisats wird so geführt, daß ein Pfropfgrad von 10 bis 45 Gew.-%, vorzugsweise von 15 - 40 Gew.-%, im Pfropfmischpolymerisat (B) resultiert.

Zusätzlich zu dem Pfropfmischpolymerisat ($b_1$ und $b_2$) enthält das Mischpolymerisat B als weitere Komponente ($b_3$) eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente ($b_3$) soll 20 bis 40 Gew.-%, bezogen auf das jeweilige Copolymerisat der Hartkomponente, betragen. Zu dieser Hartkomponente ($b_3$) zählen auch die bei der Pfropfmischpolymerisation zur Herstellung von ($b_1+b_2$) entstehenden freien, nicht gepfropften Styrol/Acrylnitril-Copolymerisate. Je nach den bei der Pfropfmischpolymerisation für die Herstellung des Pfropfmischpolymerisats gewählten Bedingungen kann es möglich sein, daß bei der Pfropfmischpolymerisation schon ein hinreichender Anteil an Hartkomponente ($b_3$) gebildet worden ist. Im allgemeinen wird es jedoch nötig sein, die bei der Pfropfmischpolymerisation erhaltenen Produkte mit zusätzlicher, separat hergestellter Hartkomponente ($b_3$) abzumischen.

Bei dieser zusätzlichen, separat hergestellten Hartkomponente ($b_3$) kann es sich um ein Styrol/Acrylnitril-Copolymerisat, ein α-Methylstyrol/Acrylnitril-Copolymerisat, ein Styrol/Methylmethacrylat-Copolymerisat, ein Styrol/Maleinsäureanhydrid-Copolymerisat oder ein α-Methylstyrol/Styrol/Acrylnitril-, ein Styrol/Acrylnitril/Methylmethacrylat-, ein Styrol/-Acrylnitril/Maleinsäureanhydrid oder ein Styrol/Acrylnitril/Acrylsäure-Terpolymerisat, bzw. ein α-Methylstyrol/Styrol/Acrylnitril-Terpolymeris at handeln. Diese Copolymerisate können einzeln oder auch in Mischung miteinander für die Hartkomponente eingesetzt werden, so daß es sich bei der zusätzlichen, separat hergestellten Hartkomponente ($b_3$) der erfindungsgemäßen Mischungen beispielsweise um eine Mischung aus einem Styrol/Acrylnitril-Copolymerisat und einen α-Methylstyrol/Acrylnitril-Copolymerisat handeln kann. In dem Fall, in dem die Hartkomponente ($b_3$) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.-%, vorzugsweise nicht mehr als 5 Gew.-%, bezogen auf das Copolymerisat, voneinander abweichen.

Die Hartkomponente ($b_3$) der erfindungsgemäßen Massen kann jedoch auch nur aus einem einzigen Styrol/Acrylnitril-Copolymerisat bestehen, nämlich dann, wenn zur Herstellung der Pfropfmischpolymerisate als auch zur Herstellung der zusätzlichen, separat hergestellten Hartkomponenten von den gleichen Monomer-Gemisch aus Styrol und Acrylnitril ausgegangen wird.

Die zusätzliche, separat hergestellte Hartkomponente ($b_3$) kann nach den herkömmlichen Methoden erhalten werden. So kann die Copolyterisation des Styrols und/oder α-Methylstyrols mit dem Acrylnitril in Masse, Lösung, Suspension oder wäßriger Emulsion durchgeführt werden. Die Hartkomponente ($b_3$) hat vorzugsweise eine Viskositätszahl von 40 bis 100, insbesondere von 50 bis 80.

Komponente C:

Die erfindungsgemäßen Formmassen enthalten gegebenenfalls als weitere Komponente (C) Zusatzstoffe oder Mischungen davon, wie sie für ABS-, ASA-und AES-Polymerisate und Polycarbonate gebräuchlich sind. Als solche Zusatzstoffe seien beispielsweise genannt: Füllstoffe, weitere Polymere, Farbstoffe, Pigmente, Antistatika, Antioxidantien, Flammschutzmittel und Schmiermittel. Die Zusatzstoffe werden in üblichen und wirksamen Mengen, vorzugsweise in Mengen von 0,1 bis zu insgesamt etwa 30 Gew.-%, bezogen auf die Mischung aus (A + B + C) eingesetzt.
Komponente D:

Komponente D der erfindungsgemäßen Formmassen sind lineare Dreiblockcopolymerisate X - Y - X. Sie werden in Mengen von 0,1 bis 3,0 Gew.-%, bevorzugt in Mengen von 0,2 bis 1,5 Gew.-%, jeweils bezogen auf A und B, angewendet. In den Grenzen von 0,3 bis 1,1 Gew.-% entfalten diese Bestandteile ihre volle Wirksamkeit in Bezug auf die Verarbeitungseigenschaften der Formmasse, und die Bindenahtfestigkeit von Formteilen daraus und beeinträchtigten die Mechanik der Formmasse praktisch nicht. Bei höheren Anteilen, beginnend ab etwa 1,5 Gew.-% sinkt der Vicatwert und die Zähigkeit; bei Mengen von unter 0,1 Gew.-% nimmt die Verarbeitungsbreite ab.

Die Herstellung der linearen Dreiblockcopolymerisate erfolgt in an sich bekannter Weise (N. Schönfeldt, Grenzflächenaktive Ethylenoxid-Addukte, Stuttgart, Wissenschaftliche Verlagsgesellschaft mbH, Stuttgart, 1976, S. 53) durch Polymerisation, wobei zunächst ein mittelständiger Polypropylenoxidblock Y mit dem Molekulargewichtsbereich (Zahlenmittel des mittleren Molekulargewichts) von 900 bis 3500, insbesondere von 900 bis 2000 hergestellt wird, an dessen beiden Enden bevorzugt je ein Block aus Ethylenoxid angelagert wird. Diese X-Blöcke haben ein mittleres Molekulargewicht im Bereich von 50 - 2000, insbesondere von 80 bis 1500 so daß das mittlere Molgewicht des Dreiblockcopolymerisates X - Y - X im Bereich von 1000 bis 7500 liegt. Unter dem Molekulargewicht der Blockbestandteile X und Y sollen die mittleren Molekulargewichte [Zahlenmittel $M_n$ bestimmt z. B. aus der OH-Zahl (DIN 53 240)] verstanden werden.

Es ist bevorzugt, lineare Dreiblockcopolymerisate, die aus Homopolymerisatblöcken aufgebaut sind, zu verwenden.

Der Anteil der beiden entständigen Blockcopolymerisate X am Blockcopolymerisat kann 10 bis 80 Gew.-%, vorzugsweise 10 bis 40 Gew.-% und insbesondere 10 - 20 Gew.-% und der des mittelständigen Polypropylenblocks Y 90 bis 20 Gew.-%, vorzugsweise 90 bis 60 Gew.-% betragen.

Das Einarbeiten des Bestandteils C in die Komponenten A oder B der Formmasse kann auf allen dem Fachmann bekannten Wegen durchgeführt werden. Insbesondere hat sich das Vermischen der Bestandteile sowie die Polymerisation der Komponente C in Gegenwart der Komponente B als geeignet erwiesen.

Herstellung der Formmasse

Die Herstellung der erfindungsgemäßen Formmasse kann durch Mischen der Komponenten A, B, C und der Zusatzstoffe nach bekannten Verfahren erfolgen. Dafür können bekannte Mischaggregate verwendet werden. Vorzugsweise geschieht das Mischen der Komponenten (A), (B), (C) und (D) durch gemeinsames Extrudieren, Kneten oder Verwalzen der Komponenten.

Es können auch einzelne Komponenten der Formmasse zu Teilmischungen vorgemischt und diese Teilmischungen innig, z. B. in Knetern oder unter Erwärmung einer Teilmischung in Extrudern vernetzt werden.

So können insbesondere die Komponente A und die Hartmatrix der Komponente B, d.h. $b_3$, gemischt werden; in einem Extruder wird in eine Schmelze dieser Mischung dann das Pfropfmischpolymerisat $(b_1 + b_2)$ und die Komponente C, gegebenenfalls mit den Zusatzstoffen D, z. B. trocken vorgemischt, eingeführt.

Die genannten Methoden sind insbesondere anwendbar wenn als Komponenten der Formmasse übliche Handelsprodukte angewendet werden.

Es kann sich jedoch als vorteilhaft erweisen, die in wäßriger Dispersion erhaltenen Produkte der Pfropfmischpolymerisation [Komponente $b_1 + b_2$] teilweise zu entwässern oder direkt als Dispersion mit dem Polycarbonat A, dem Copolymerisat $b_3$ und den Komponenten C und D zu vermischen, wobei dann während des Vermischens die vollständige Trocknung der Pfropfmischpolymerisate erfolgt.

Die erfindungsgemäßen Formmassen können nach den bekannten Verfahren der Thermoplastverarbeitung bearbeitet werden, also z. B. durch Extrudieren, Spritzgießen, Kalandrieren, Kohlkörperblasen, Pressen oder Sintern; besonders bevorzugt werden aus den nach dem erfindungsgemäßen Verfahren hergestellten Formmassen Formteile durch Spritzgießen für den Automobilbau hergestellt.

Die in den Beispielen und Vergleichsversuchen aufgeführten Produkteigenschaften wurden wie folgt gemessen;

1. Die Entformungsversuche wurden auf einer Spritzgußmaschine Typ Ahrberg 320 E mit Hilfe eines speziellen Werkzeugs durchgeführt. Hierbei wurde über Druckaufnehmerentformungskraft in (N) beim Abschieben einer Hülse vom Werkzeug gemessen

2. Die Prüfung der Bindenaht erfolgte an einer Probe eines zweifach angespritzten zylindrisches Stabes mit Zusammenflußstelle der Schmelze in der Mitte des Meßbereichs Die Bindenahtfestigkeit wurde dadurch ermittelt, daß die Schlagzähigkeit $(a_n)$ dieses Stabes gemessen.

3. Die Bestimmung der Viskositätszahl erfolgt bei 23° C analog DIN 53 726 für die Hartmatrix der Komponente B, d. h. für $b_3$ dabei werden 0,5 g Material in 100 ml Dimethylformamid gelöst.
Von den Polycarbonaten wurde die Grenzviskosität in dl/g bei 25° C in Methylenchlorid gemessen.

4. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt werden. Die Ultrazentrifugenmessung liefert die integrale Massenverteilung des Teilchendurchmessers einer Probe.

6

Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

5. Die Fließfähigkeit wurde analog DIN 53 735 bei einer Temperatur von 260°C und einer Belastung von 5 Newton in (g/10 min) gemessen.

Zur Durchführung der Beispiele und von Vergleichsversuchen wurden die nachstehend beschriebenen Produkte verwendet:

Als Komponente A) wurde ein Polycarbonat auf der Basis von 2,2-Bis-(4-hydroxiphenyl)propan mit einer Grenzviskosität von 0,52 [dl/g] eingesetzt.

Als Komponente B-1) wurde folgendes Pfropfmischpolymerisat verwendet: 45 Gew.-%, bezogen auf B-1 Pfropfmischpolymerisat (Komponente $b_1b_2$ gemäß Anspruch), bei dem auf 60 Gewichtsteile eines Polybutadienkautschuks (Komponente $b_1$ gemäß Anspruch) mit einer mittleren Teilchengröße ($d_{50}$ der integralen Massenverteilung) von 0,3 µm 40 Gewichtsteile einer Mischung aus Styrol/Acrylnitril (Komponente $b_2$ gemäß Anspruch) im Gewichtsverhältnis 70 : 30 aufgepfropft sind und mit 55 Gew.-%, bezogen auf B-1, eines Styrol/Acrylnitrilcopolymerisates (Komponente $b_3$ gemäß Anspruch) mit einem Acrylnitrilanteil von 35 Gew.-% und einer Viskositätszahl von 80 ml/g sowie zusätzlich 0,2 Teilen eines sterisch gehinderten Phenols (Rütenol® gemischt wird.

Als Komponente B-2) wurde folgendes Pfropfmischpolymerisat eingesetzt; 50 Gew.-%, bezogen auf B-2, Pfropfmischpolymerisat bei dem auf 60 Gewichtsteile eines teilsweise vernetzten Polybutylacrylatkautschuks ($b_1$) mit einer mittleren Teilchengröße ($d_{50}$-Wert der integralen Masseverteilung) von 0,4 µm 13 Gewichtsteile Styrol ($b_2a_1$) und 27 Gewichtsteile ($b_2a_2$) einer Mischung aus Styrol/Acrylnitril im Gewichtsverhältnis 70 : 30 aufgepfropft sind. Dieses Pfropfmischpolymerisat ($b_1b_2$) wird mit 50 Gew.-%, bezogen auf B-2, einem Styrol/Acrylnitril-Copolymerisat ($b_3$) mit einem Acrylnitrilanteil von 35 Gew.-% und zusätzlich 0,2 Teilen eines ster. gehinderten Phenols (Rütenol®) gemischt.

Als Komponente D) wurden Polyethylenoxidpropylenoxid-Blockcopolymere eingesetzt, deren Zusammensetzung in den Tabellen 1 und 2 aufgeführt ist.

Beispiele und Vergleichsversuche
Beispiele 1 bis 16 und Vergleichsversuche 1 bis 5

Die in der Tabelle angegebenen Gewichtsteile der Komponenten A, B-1, B-2 und D, wurden in trockener Form gemischt, auf einem Extruder bei 260°C aufgeschmolzen, geknetet und anschließend granuliert. Aus den Granulat wurden Proben für Formmassen hergestellt, an denen die in den Tabellen 1 und 2 aufgeführten Eigenschaften bestimmt wurden.

7

Tabelle 1

| | A Teile | B-1 Teile | D Gew.-% | EO-Anteil Gew.-% | PO-Anteil Gew.-% | Gesamt-molekular-gewicht Mn | Bindenaht-festigkeit [kJ/m²] | Entformungs-kraft [N] | Fließfähig-keit MFI 260°/5 [g/10 min] |
|---|---|---|---|---|---|---|---|---|---|
| **Vergleichs-versuch** | | | | | | | | | |
| 1 | 100 | - | - | | | | 67 | 720 | 6 |
| 2 | - | 100 | - | | | | 20 | 410 | 0,5 |
| 3 | 70 | 30 | | | | | 4 | 710 | 15 |
| 4 | 60 | 40 | | | | | 6 | 720 | 13 |
| 5 | 40 | 60 | | | | | 6 | 650 | 6 |
| **Beispiel** | | | | | | | | | |
| 1 | 75 | 25 | 1 | 10 | 90 | 1200 | 12 | 625 | 43 |
| 2 | 25 | 75 | 1 | 10 | 90 | 1200 | 10 | 175 | 5 |
| 3 | 60 | 40 | 1 | 10 | 90 | 1200 | 21 | 298 | 29 |
| 4 | 60 | 40 | 0,75 | 10 | 90 | 1200 | 15 | 340 | 23 |
| 5 | 60 | 40 | 0,5 | 10 | 90 | 1200 | 14 | 350 | 20 |
| 6 | 60 | 40 | 0,25 | 10 | 90 | 1200 | 12 | 385 | 15 |
| 7 | 60 | 40 | 1 | 10 | 90 | 3600 | 16 | 300 | 22 |
| 8 | 60 | 40 | 0,25 | 10 | 90 | 3600 | 14 | 335 | 20 |
| 9 | 60 | 40 | 0,5 | 10 | 90 | 3600 | 13 | 345 | 17 |
| 10 | 60 | 40 | 0,25 | 10 | 90 | 3600 | 12 | 400 | 14 |

Tabelle 2

| | A Teile | B-1 Teile | D Gew.-% | EO-Anteil Gew.-% | PO-Anteil Gew.-% | Gesamt-molekular-gewicht Mn | Bindenaht-festigkeit [kJ/m²] | Entformungs-kraft [N] | Fließfähig-keit MFI 260°/5 [g/10 min] |
|---|---|---|---|---|---|---|---|---|---|
| **Vergleichs-versuch** | 60 | 40 | - | - | - | - | 9 | 650 | 11 |
| **Beispiel** | | | | | | | | | |
| 11 | 60 | 40 | 1 | 10 | 90 | 1200 | 16 | 500 | 14 |
| 12 | 60 | 40 | 1 | 40 | 60 | 2250 | 12 | 450 | 15 |
| 13 | 60 | 40 | 1 | 10 | 90 | 3600 | 12 | 350 | 12 |
| 14 | 60 | 40 | 0,75 | 10 | 90 | 3600 | 11 | 460 | 11 |
| 15 | 60 | 40 | 0,5 | 10 | 90 | 3600 | 11 | 510 | 11 |
| 16 | 60 | 40 | 0,25 | 10 | 90 | 3600 | 11 | 620 | 11 |

## Patentansprüche

1. Thermoplastische Formmasse enthaltend

A) 10 bis 90 Gew.-%, bezogen auf A+B, mindestens eines Polycarbonates,

B) 90 bis 10 Gew.-%, bezogen auf A+B, mindestens eines Mischpolymerisates, das gebildet wird aus

$b_1$) mindestens einem, gegebenenfalls vernetzten, Elastomeren mit einer Glastemperatur unterhalb 0°C in einem Anteil von 1 - 40 Gew.-%, bezogen auf B, das aufgebaut ist aus mindestens einem der Monomeren aus der Gruppe der

konjugierten Diene mit 4 bis 5 C-Atomen, der (Meth)acrylsäurealkylester mit 1 bis 8 C-Atomen im Alkylrest, der vinylaromatischen Monomeren mit 6 bis 12 C-Atomen

oder von Ethylen, Propylen und einem nicht konjugierten Dien,

worauf,

$b_2$) 5 bis 40 Gew.-%, bezogen auf B, mindestens eines Copolymerisates aufgepropft ist, das aufgebaut ist aus mindestens einem vinylaromatischen Monomeren und mindestens einem (nichtaromatischen) ethylenisch ungesättigten Monomeren im Gewichtsverhältnis 90 : 10 bis 60 : 40 und

wobei das Produkt der Pfropfmischpolymerisation eine mittlere Teilchengröße von 0,200 - 1,0 µm ($d_{50}$-Wert) der integralen Masseverteilung aufweist, und

$b_3$) mindestens einem Copolymerisat (Hartmatrix), in einem Anteil von 20 bis 94 Gew.-%, bezogen auf B, das besteht aus

50 - 90 Gew.-%, bezogen auf $b_3$), mindestens eines vinylaromatischen Monomeren und

10 - 50 Gew.-%, bezogen auf b₃), mindestens eines (nichtaromatischen) ethylenisch ungesättigten Monomeren

enthaltend gegebenenfalls

c) übliche Zusatzstoffe

dadurch gekennzeichnet, daß die Formmasse zusätzlich wenigstens ein aus Ethylenoxid (X) - und Propylenoxideinheiten (Y) aufgebautes lineares Dreiblockcopolymerisat D der Struktur

$$X - Y - X$$

in einem Anteil von 0.1 bis 3 Gew.-% bezogen auf A + B, enthält.

wobei das mittlere Molekulargewicht (Zahlenmittel) des Dreiblockcopolymerisats im Bereich von 1000 bis 7500 liegt und wobei die mittleren Molekulargewichte (Zahlenmittel) der Blöcke

X je von 50 bis 2000

und die des

Y-Blockes 900 bis 3500 betragen.

2. Thermoplastische Formmasse bestehend aus

A) 10 bis 90 Gew.-%, bezogen auf A + B, mindestens eines Polycarbonates,

B) 90 bis 10 Gew.-%, bezogen auf A + B, mindestens eines Mischpolymerisates,

das gebildet wird aus

$b_1$) mindestens einem, gegebenenfalls vernetzten, Elastomeren mit einer Glastemperatur unterhalb 0°C in einem Anteil von 1 - 40 Gew.-%., bezogen auf B, das aufgebaut ist aus mindestens einem der Monomeren aus der Gruppe der

konjugierten Diene mit 4 bis 5 C-Atomen, der (Meth)acrylsäurealkylester mit 1 bis 8 C-Atomen im Alkylrest, der vinylaromatischen Monomeren mit 6 bis 12 C-Atomen

oder von Ethylen, Propylen und einem nicht konjugierten Dien,

worauf,

$b_2$) 5 bis 40 Gew.-%, bezogen auf 6, mindestens ein Copolymerisat aufgepfropft ist, das aufgebaut ist aus mindestens einem vinylaromatischen Monomeren und mindestens einem (nichtaromatischen) ethylenisch ungesättigten Monomern im Gewichtsverhältnis 90 : 10 bis 60 : 40 und wobei das Produkt der Pfropfmischpolymerisation eine mittlere Teilchengröße von 0,200 - 1,0 μm ($d_{50}$-Wert) der integralen Masseverteilung aufweist, und

$b_3$) mindestens einem Copolymerisat (Hartmatrix), in einem Anteil von 20 bis 94 Gew.-% bezogen auf 8, das besteht aus

50 - 90 Gew.-%, bezogen auf b₃), mindestens eines vinylaromatischen Monomeren und

10 - 50 Gew.-%, bezogen auf b₃), mindestens eines (nichtaromatischen) ethylenisch ungesättigten Monomeren

enthaltend gegebenenfalls

C) übliche Zusatzstoffe

dadurch gekennzeichnet, daß die Formmasse zusätzlich wenigstens ein

aus Ethylenoxid (X) - und Propylenoxideinheiten (Y) aufgebautes lineares Dreiblockcopolymerisat D der Struktur

$$X - Y - X$$

in einem Anteil von 0.1 bis 3 Gew.-%, bezogen auf A + B, enthält, wobei das mittlere Molekulargewicht (Zahlenmittel) des Dreiblockcopolymerisats im Bereich von 1000 bis 7500 liegt und wobei die mittleren Molekulargewichte (Zahlenmittel) der Blöcke

X je von 50 bis 2000

und die des

Y-Blockes 900 bis 3500 betragen.

3. Thermoplastische Formmasse bestehend aus

A) 25 bis 75 Gew.-%, bezogen auf A + B, mindestens eines Polycarbonates,

B) 75 bis 25 Gew.-%, bezogen auf A + B, mindestens eines Mischpolymerisates,

das gebildet wird aus, jeweils bezogen auf B,

$b_1$) Polybutadien mit einer Glastemperatur unterhalb 0°C in einem Anteil von 1 - 40 Gew.-%

worauf,

$b_2$) 5 bis 40 Gew.-% mindestens eines Copolymerisates aufgepfropft sind, das besteht aus Styrol und Acrylnitril im Gewichtsverhältnis 90 : 10 bis 60 : 40 und wobei das Produkt der Pfropfmischpolymerisation eine mittlere Teilchengräße von 0,200 - 1,0 μm ($d_{50}$-Wert) der integralen Masseverteilung aufweist, und

$b_3$) mindestens einem Copolymerisat (Hartmatrix), in einem Anteil von 40 bis 85 Gew.-%

das besteht aus

65 - 80 Gew.-%, bezogen auf b₃), Styrol und/oder Methylderivaten des Styrols und

35 - 20 Gew.-%, bezogen auf b₃), Acrylnitril

9

enthaltend gegebenenfalls
C) übliche Zusatzstoffe
dadurch gekennzeichnet, daß die Formmasse zusätzlich wenigstens ein aus Ethylenoxid (X) - und Propylenoxideinheiten (Y) aufgebautes lineares Dreiblockcopolymerisat D der Struktur

$$X - Y - X$$

in einem Anteil von 0.1 bis 3 Gew.-% bezogen auf A + B enthält wobei das mittlere Molekulargewicht (Zahlenmittel) des Dreiblockcopolymerisats im Bereich von 1000 bis 7500 liegt und wobei die mittleren Holekulargewichte (Zahlenmittel) der Blöcke
X je von 50 bis 2000
und die des
Y-Blockes 900 bis 3500 betragen.

4. Thermoplastische Formmasse bestehend aus
A) 25 bis 75 Gew.-%, bezogen auf A + B, mindestens eines Polycarbonates,
B) 75 bis 25 Gew.-%, bezogen auf A + B, mindestens eines Mischpolymerisates,
das gebildet wird aus, jeweils bezogen auf B,
$b_1$ mindestens einem vernetzten Elastomeren mit einer Glastemperatur unterhalb 0°C in einem Anteil von 1 - 40 Gew.-% auf Basis von Acrylsaurealkylestern mit 1 bis 8 C-Atomen im Alkylrest worauf,
$b_2$) 5 bis 40 Gew.-% mindestens eines Copolymerisates aufgeofropft sind, das aufgebaut ist aus Styrol und Acrylnitril im Gewichtsverhaltnis 90 : 10 bis 60 : 40 und wobei das Produkt der Pfropfmischpolymerisation eine mittlere Teilchengröße von 0,200 - 1,0 μm ($d_{50}$-Wert) der integralen Masseverteilung aufweist, und
$b_3$) mindestens einem Copolymerisat (Hartmatrix), in einem Anteil von 40 bis 85 Gew.-%
das besteht aus
65 - 80 Gew.-%, bezogen auf $b_3$), Styrol und/oder Methylderivaten des Styrols
und
35 - 20 Gew.-%, bezogen auf $b_3$), Acrylnitril
enthaltend gegebenenfalls
C) übliche Zusatzstoffe
dadurch oekennzeichnet, daß die Formmasse zusätzlich wenigstens ein aus Ethylenoxid (X) - und Propylenoxideinheiten (Y) aufgebautes lineares Dreiblockcopolymerisat D der Struktur

$$X - Y - X$$

in einem Anteil von 0.1 bis 3 Gew.-% bezogen auf A + B, enthält,
wobei das mittlere Molekulargewicht (Zahlenmittel) des Dreiblockcopolymerisats im Bereich von 1000 bis 7500 liegt und wobei die mittleren Molekulargewichte (Zahlenmittel) der Blöcke
X je von 50 bis 2000
und die des
Y-Blockes 900 bis 3500 betragen.

5. Formmasse nach Anspruch 1, dadurch gekennzeichnet, daß das Dreiblockcopolymerisat D in einem Anteil von 0,2 bis 1,5 Gew.-%, bezogen auf A + B, zugegen ist.

6. Formmasse nach Anspruch 1, dadurch gekennzeichnet, daß der Anteil der endständigen Blöcke X 10 bis 80 Gew.-%, bezogen auf das Dreiblockcopolymerisat, beträgt.

7. Verfahren zur Herstellung von Formmassen gemäß Anspruch 1, durch übliches Mischen der Komponenten der Formmasse, gegebenenfalls unter Herstellung von Teilmischungen und Abmischung derselben.

8. Verfahren nach Anspruch 8, dadurch gekennzeichnet, daß man in eine Schmelze der Mischung der Komponenten A und $b_3$, gegebenenfalls mit C, das Pfropfmischpolymerisat ($b_1$ + $b_2$) zusammen mit der Komponente D bei Temperaturen oberhalb von 200°C einmischt.

9. Verwendung der Formmasse gemäß Anspruch 1 zur Herstellung von Formteilen.

10. Formteile aus Formmassen gemäß Anspruch 1.

## Claims

1. A thermoplastic molding material containing
A) from 10 to 90 % by weight, based on A + B, of one or more polycarbonates,
B) from 90 to 10 % by weight, based on A + B, or one or more copolymers
which are formed from
$b_1$) 1 - 40 % by weight, based on B, of one or more uncrosslinked or crosslinked elastomers which have a glass transition temperature below 0°C and are composed of one or more monomers from the group consisting of the conjugated dienes of 4 or 5 carbon atoms, the alkyl (meth)acrylates where alkyl is of 1 to 6 carbon atoms, and the vinylaromatic monomers of 6 to 12 carbon atoms,
or of ethylene, propylene and a nonconjugated diene,
on which

$b_2$) from 5 to 40 % by weight, based on B, of one or more copolymers are grafted, the said copolymers being composed of one or more vinylaromatic monomers and one or more (nonaromatic) ethylenically unsaturated monomers in a weight ratio of 90 : 10 to 60 : 40 and the product of the graft copolymerization having a median particle size of 0.200 - 1.0 $\mu$m ($d_{50}$ value of the integral mass distribution),
and

$b_3$) from 20 to 94 % by weight, based on B, of one or more copolymers (hard matrix),
which consist of
50 - 90 % by weight, based on $b_3$), of one or more vinylaromatic monomers
and

10 - 50 % by weight, based on $b_3$), of one or more (nonaromatic) ethylenically unsaturated monomers
and, if required, containing
C) conventional additives,
wherein the molding material additionally contains one or more linear 3-block copolymers D which are composed of ethylene oxide (X) and propylene oxide (Y) units and have the structure

$$X - Y - X$$

in an amount of from 0.1 to 3 % by weight, based on A + B,
the mean molecular weight(number average) of the
3-block copolymer being from 1000 to 7500 and the mean molecular weights (number average) of the blocks X each being from 50 to 2000 and those of the Y block being from 900 to 3500.

2. A thermoplastic molding material consisting of
A) from 10 to 90 % by weight, based on A + B, of one or more polycarbonates,
B) from 90 to 10 % by weight, based on A + B, of one or more copolymers
which are formed from

$b_1$) 1 - 40 % by weight, based on 8, of one or more uncrosslinked or crosslinked elastomers which have a glass transition temperature below 0°C and are composed of one or more monomers from the group consisting of the conjugated dienes of 4 or 5 carbon atoms, the alkyl (meth)acrylates where alkyl is of 1 to 8 carbon atoms, and the vinylaromatic monomers of 6 to 12 carbon atoms, or of ethylene, propylene and a nonconjugated diene,
on which

$b_2$) from 5 to 40 % by weight, based on B, of one or more copolymers are grafted, the said copolymers being composed of one or more vinylaromatic monomers and one or more (nonaromatic) ethylenically unsaturated monomersin a weight ratio of 90 : 10 to 60 : 40 and the product of the graft copolymerization having a median particle size of 0.200 - 1.0 $\mu$m ($d_{50}$ value of the integral mass distribution),
and

$b_3$) from 20 to 94 % by weight, based on B, of one or more copolymers (hard matrix), which consist of
50 - 90 % by weight, based on $b_3$), of one or more vinyl aromatic monomers
and

10 - 50 % by weight, based on $b_3$), of one or more (nonaromatic) ethylenically unsaturated monomers
and, if required, containing
C) conventional additives,
where in the molding material additionally contains one or more linear 3-block copolymers D which are composed of ethylene oxide (X) and propylene oxide (Y) units and have the structure

$$X - Y - X$$

in an amount of from 0.1 to 3 % by weight, based on A + B,
the mean molecular weight (number average) of the 3-block copolymer being from 1000 to 7500 and the mean molecular weights (number average) of the blocks X each being from 50 to 2000 and those of the Y block being from 900 to 3500.

3. A thermoplastic molding material consisting of
A) from 25 to 75 % by weight, based on A + B, of one or more polycarbonates,
B) from 75 to 25 % by weight, based on A + B, of one or more copolymers
which are formed from, based on B in each case,

$b_1$) 1 - 40 % by weight of polybutadiene having a glass transition temperature below 0°C, on which

$b_2$) from 5 to 40 % by weight of one or more copolymers are grafted, the said copolymers being composed of styrene and acrylonitrile in a weight ratio of 90 : 10 to 60 : 40 and the product of the graft copolymerization having a median particle size of 0.200 - 1.0 $\mu$m ($d_{50}$ value of the integral mass distribution),
and

$b_3$) from 40 to 85 % by weight of one or more copolymers (hard matrix), which consist of 65 - 80 % by weight, based on $b_3$), of styrene and/or methyl derivatives of styrene

11

and

35 - 20 % by weight, based on $b_3$), of acrylonitrile

and, if required, containing

C) conventional additives, wherein the molding material additionally contains one or more linear 3-block copolymers D which are composed of ethylene oxide (X) and propylene oxide (Y) units and are of the structure

X - Y - X

in an amount of from 0.1 to 3 % by weight based on A + B, the mean molecular weight (number average) of the 3-block copolymer being from 1000 to 7500 and the mean molecular weights (number average) of the blocks X each being from 50 to 2000 and those of the Y block being from 900 to 3500.

A thermoplast ic molding material consisting of

A) from 25 to 75 % by weight, based on A + B, of one or more polycarbonates,

B) from 75 to 25 % by weight, based on A + B, of one or more copolymers which are formed from, based in each case on B,

$b_1$ ) 1 - 40 % by weight of one or more crosslinked elastomers having a glass transition temperature below 0°C and based on alkyl acrylates where alkyl is of 1 to 8 carbon atoms, on which

$b_2$) from 5 to 40 % by weight of one or more copolymers are grafted, the said copolymers being composed of styrene and acrylonitrile in a weight ratio of from 90 : 10 to 60 : 40 and the product of the graft copolymerization having a median particle size of 0.200 - 1.0 µm ($d_{50}$ value of the integral mass distribution), and

$b_3$) from 40 to 85 % by weight of one or more copolymers (hard matrix), which consist of 65 - 80 % by weight, based on $b_3$), of styrene and/or methyl derivatives of styrene and,

35 - 20 % by weight, based on $b_3$), of acrylonitrile,

and, if required, containing

C) conventional additives,

wherein the molding material additionally contains one or more linear 3-block copolymers D which are composed of ethylene oxide (X) and propylene oxide (Y) units and are of the structure

X - Y - X

in an amount of from 0.1 to 3 % by weight, based on A + B,

the mean molecular weight (number average) of the 3-block copolymer being from 1000 to 7500 and the mean molecular weights (number average) of the blocks X each being from 50 to 2000 and those of the Y block being from 900 to 3500.

5. A molding material as claimed in claim 1, wherein the 3-block copolymer D is present in an amount of from 0.2 to 1.5 % by weight, based on A + B.

6. A molding material as claimed in claim 1, wherein the amount of the terminal blocks X is from 10 to 80 % by weight, based on the 3-block copolymer.

7. A process for the preparation of a molding material as claimed in claim 1, by mixing the components of the molding materials in a conventional manner, if necessary with preparation of part mixtures and mixing of the latter.

8. A process as claimed in claim 8, wherein the graft copolymer ($b_1$ + $b_2$) together with the component D is mixed, at above 200°C, into a melt of the mixture of components A and $b_3$ with or without C.

9. Use of a molding material as claimed in claim 1 for the product ion of moldings.

10. A molding obtained from a molding material as claimed in claim 1.

## Revendications

1. Matière à mouler thermoplastique qui contient

A) 10 à 90 % en poids, par rapport à A + B, d'au moins un polycarbonate,

B) 90 à 10 % en poids, par rapport à A + B, d'au moins un copolyère, constitué de

$b_1$) au moins un élastomère , éventuellement réticulé, avec une température de transition vitreuse inférieure à 0°C, en une proportion de 1 à 40 % en poids, par rapport à B, constitué d'au moins l'un des monomères appartenant au groupe

des diènes conjugués comportant de 4 à 5 atomes de carbone, des esters alkyliques de l'acide (méth)acrylique dont le radical alkyle comporte de 1 à 8 atomes de carbone, des monomères vinylaromatiques comportant de 6 à 12 atomes de carbone,

ou d'éthylène, de propylène et d'un diène non conjugué, sur lequel

$b_2$) sont greffés de 5 à 40 % en poids, par rapport à B, d'au moins un copolymère, qui est constitué d'au

12

moins un monomère vinylaromatique et d'au moins un monomère à insaturation éthylénique (non aromatique) dans le rapport pondéral de 90 : 10 à 60 : 40 et où le produit de la copolymérisation de greffage présente un calibre moyen des particules de 0,200 à 1,0 μm (valeur $d_{50}$) de la répartition ou distribution massique intégrale,

et

b₃) au moins un copolymère (matrice dure), en une proportion de 20 à 94 % en poids, par rapport à B, qui se compose de

50 à 90 % en poids, par rapport à b₃), d'au moins un monomère vinylaromatique et

10 à 50 % en poids, par rapport à b₃), d'au moins un monomère à insaturation éthylénique (non aromatique) qui contient éventuellement

C) des additifs usuels, caractériséen ce que la matière à mouler contient complémentairement au moins un copolymère à trois blocs linéaire D, constitué d'unités oxyde d'éthylène (X) et oxyde de propylène (Y), répondant à la structure

$$X - Y - X$$

en une proportion de 0,1 a 3 % en poids, par rapport à A + B, où le poids moléculaire moyen (moyenne en nombre) du copolymere à trois blocs varie dans la plage de 1000 à 7500 et où les poids moléculaires moyens (moyenne en nombre) des blocs X varient de 50 à 2000 et

du bloc Y varient de 900 à 3500.

2. Matière à mouler thermoplastique qui se compose de

A) 10 à 90 % en poids, par rapport à A + B, d'au moins un polycarbonate,

B) 90 à 10 % en poids, par rapport à A + B, d'au moins un copolymère, qui est constitué de

b₁) au moins un élastomère, éventuellement réticulé, avec une température de transition vitreuse inférieure à 0°C, en une proportion de 1 à 40 % en poids, par rapport à B, qui est formé d'au moins l'un des monomères choisis dans le groupe formé par

les diènes conjugués comportant de 4 à 5 atomes de carbone, les esters alkyliques de 1' acide (méth)acrylique dont le radical alkyle comporte de 1 à 8 atomes de carbone, les monomères vinylaromatiques comportant de 6 à 12 atomes de carbone,

ou de l'éthylène, du propylène et d'un diène non conjugué, sur lequel

b₂) sont greffés de 5 à 40 % en poids, par rapport à B, d'au moins un copolymère qui est constitué d'au moins un monomère vinylaromatique et d'au moins un monomère à insaturation éthylénique (non aromatique) dans le rapport pondéral de 90 : 10 à 60 : 40 et où le produit de la copolymérisation de greffage présente un calibre moyen des particules de 0,200 à 1,0 μm (valeur $d_{50}$) de la répartition ou distribution massique intégrale,

et

b₃) au moins un copolymère (matrice dure), en une proportion de 20 à 94 % en poids, par rapport à B, qui se compose de

50 à 90 % en poids, par rapport à b₃), d'au moins un monomère vinylaromatique et

10 à 50 % en poids, par rapport à b₃), d'au moins un monomère à insaturation éthylénique (non aromatique) contenant éventuellement

C) des additifs usuels, caractérisée en ce que la matière à mouler contient complémentairement au moins un copolymère à trois blocs linéaire D constitué d'unités oxyde d'éthylène (X) et oxyde de propylène (Y), répondant à la structure

$$X - Y - X$$

en une proportion de 0,1 à 3 % en poids, par rapport à A + B, où le poids moléculaire moyen (moyenne en nombre) du copolymère à trois blocs fluctue dans la plage de 1000 à 7500 et où les poids moléculaires moyens (moyenne en nombre) des blocs X varient de 50 à 2000 et

du bloc Y varient de 900 à 3500.

3. Matières à mouler thermoplastiques qui se composent de

A) 25 à 75 % en poids, par rapport à A + B, d'au moins un polycarbonate,

B) 75 à 25 % en poids, par rapport à A + B, d'au moins un copolymère, qui est formé, chaque fois rapporté à B,

b₁) de polybutadiène possédant une température de transition vitreuse inférieure à 0°C, en une proportion de 1 à 40 % en poids, sur lequel

b₂) sont greffés de 5 à 40 % en poids d'au moins un copolymère qui se compose de styrène et d'acrylonitrile dans le rapport pondéral de 90 : 10 a 60 : 40 et où le produit de la copolymérisation de greffage présente un

13

calibre moyen des particules de 0,200 à 1,0 μm (valeur $d_{50}$) de la répartition ou dispersion massique intégrale
et

$b_3$) au moins un copolymère (matrice dure) en une proportion de 40 à 85 % en poids
qui se compose de
65 à 80 % en poids, par rapport à $b_3$), de styrène ou de dérivés méthyliques du styrène
et
35 à 20 % en poids, par rapport à $b_3$), d'acrylonitrile
contenant éventuellement
C) des additifs usuels,
caractérisée en ce que la matière à mouler contient complémentairement au moins un copolymère à trois blocs linéaire D constitué d'unités oxyde d'éthylène (X) et oxyde de propylène (Y), répondant à la structure

X - Y - X

en une proportion de 0,1 a 3 % en poids, par rapport à A + B,
où le poids moléculaire moyen (moyenne en nombre) du copolymère à trois blocs fluctue dans la plage de 1000 à 7500 et où les poids moléculaires moyens (moyenne en nombre)
des blocs X varient de 50 à 2000
et
du bloc Y varient de 900 à 3500.

4. Matières à mouler thermoplastiques qui se composent de
A) 25 à 75 % en poids, par rapport à A + B, d'au moins un polycarbonate,
B) 75 à 25 % en poids, par rapport à A + B, d'au moins un copolymère,
qui est formé de chaque fois par rapport à B,

$b_1$) au moins un élastomère réticulé avec une température de transition vitreuse inférieure à 0°C, en une proportion de 1 à 40 % en poids, sur base d'esters alkyliques de l'acide acrylique, dont le radical alkyle comporte de 1 à 8 atomes de carbone,
sur lequel

$b_2$) sont greffés de 5 à 40 % en poids d'au moins un copolymère qui est formé de styrène et d'acrylonitrile dans le rapport pondéral 90 : 10 à 60 : 40 et où le produit de la copolymérisation de greffage présente une granulométrie moyenne des particules de 0,200 à 1,0 μm (valeur $d_{50}$) de la répartition ou distribution massique intégrale
et

$b_3$) au moins un copolymère (matrice dure), en une proportion de 40 à 85 % en poids, qui se compose de
65 à 80 % en poids, par rapport à $b_3$), de styrène et/ou de dérivés méthyliques du styrène
et
35 à 20 % en poids, par rapport à $b_3$), d'acrylonitrile,
qui contient éventuellement
C) des additifs usuels,
caractérisée en ce que la matière à mouler contient complémentairement au moins un copolymère à trois blocs linéaire D constitué d'unités oxyde d'éthylène (X) et oxyde de propylène (Y), répondant à la structure

X - Y - X

en une proportion de 0,1 à 3 % en poids, par rapport à A + B,
où le poids moléculaire moyen (moyenne en nombre) du copolymère à trois blocs fluctue dans la plage de 1000 à 7500 et où les poids moléculaires moyens (moyenne en nombre)
des blocs X varient de 50 à 2000
et
du bloc Y varient de 900 à 3500.

5. Matière à mouler suivant la revendication 1, caractérisée en ce que le copolymère à trois blocs D est présent en une proportion de 0,2 à 1,5 % en poids, par rapport à A + B.

6. Matière à mouler suivant la revendication 1, caractérisée en ce que la proportion des blocs terminax X varie de 10 à 80 % en poids par rapport au copolymère à trois blocs.

7. Procédé de préparation de matières à mouler suivant la revendication 1, par mélange habituel des composants de la matière à mouler, en recourant éventuellement à la préparation de mélanges partiels que l'on soumet ensuite à un mélange mutuel.

8. Procédé suivant la revendication 7, caractérisé en ce que l'on incorpore par mélange le copolymère de greffage ($b_1 + b_2$) en même temps que le composant D, dans une masse fondue du mélange des composants A et $b_3$, éventuellement avec C, à des températures supérieures à 200°C.

9. Utilisation de la matière à mouler suivant la revendication 1 pour la fabrication d'articles moulés ou mis en forme.

10. Articles mis en forme obtenus au départ de matières à mouler suivant la revendication 1.